# EUROPÄISCHE PATENTANMELDUNG

(11) **EP 2 325 788 A1**
(43) Veröffentlichungstag der Anmeldung: **25.05.2011**
(21) Anmeldenummer: 09175140.4
(22) Anmeldetag: 05.11.2009
(51) Int. Cl.: G06Q 10/00, G06Q 30/00

(54) **Vorrichtung und Verfahren zur Präsentation von Media-Dateien**

(71) Anmelder: Deutsche Telekom AG, 53113 Bonn (DE)
(72) Erfinder: Küller, Jürgen, 53757 St. Augustin (DE)

(57) **Zusammenfassung**

Die Erfindung betrifft eine Vorrichtung zum Speichern und gesteuerten Weiterleiten von Media-Dateien, eine Präsentationsanordnung, die mindestens eine solche Vorrichtung umfasst, und ein Verfahren zur multimedialen Präsentation von Dienstleistungen, Waren und/oder anderen Gegenständen. Erfindungsgemäß umfasst die Vorrichtung mindestens einen Datenspeicher zum Speichern der Media-Dateien, mindestens eine Leseeinrichtung zur kontaktlosen Kommunikation mit einer Sendeeinrichtung, und mindestens eine Steuereinrichtung zum Auswählen und Weiterleiten der Media-Dateien, so dass sie Media-Dateien speichern, weiterleiten und nach einer Kommunikation mit einer Sendeeinrichtung gezielt auswählen kann.

## Beschreibung

Die Erfindung betrifft eine Vorrichtung zum Speichern und gesteuerten Weiterleiten von Media-Dateien, eine Präsentationsanordnung, die mindestens eine solche Vorrichtung umfasst, und ein Verfahren zur multimedialen Präsentation von Dienstleistungen, Waren und/oder anderen Gegenständen.

Die Präsentation von Produkten oder Objekten, beispielsweise in Geschäften oder Ausstellungen, ist um so wirkungsvoller und erfolgreicher, je mehr Medien bei der Präsentation zusammenwirken und je mehr Sinne damit angesprochen werden. Dabei können beispielsweise erläuternder Text, graphische Detailbeschreibungen und gesprochene Passagen bis hin zu akustischer und bildlicher Untermalung zum Einsatz kommen. Der Einsatz dieser wirkungsvollen multimedialen Instrumente setzt ein multimediales Präsentationsgerät voraus, das dem Kunden das einzelne Produkt oder die jeweilige Dienstleistung präsentiert. Stationäre Systeme und Anzeigegeräte, beispielsweise Projektoren, Bildschirme und/oder Soundanlagen, sind aber sehr teuer und mit hohen Erhaltungskosten verbunden, so dass diese nur für besonders hochpreisige Produkte oder Dienstleitungen in Frage kommen.

Darüber hinaus ist es nachteilig, wenn Media-Dateien auf festen Datenträgern abgelegt sind, da hierdurch ihr Inhalt und damit die Präsentationsreihenfolge festgelegt ist. Das händische Starten einzelner Dateien in Abhängigkeit von dem Produkt, das der Kunde gerade betrachtet und zu dem er Informationen wünscht, ist wenig kundenfreundlich. Ein standortabhängiges Starten einzelner Produkt-Dateien erfordert ferner eine Modifikation des jeweiligen multimedialen Anzeigegerätes, was die Anwendung sehr unflexibel macht.

Es ist daher Aufgabe der Erfindung, eine Vorrichtung, eine Präsentationsanordnung und ein Verfahren bereitzustellen, welche die oben genannten Nachteile vermeiden und den Einsatz multimedialer Präsentationen für alle Produkte und Dienstleistungen, zumindest auch des mittelpreisigen Segments, ermöglichen.

Die Aufgabe wird erfindungsgemäß durch eine Vorrichtung der eingangs genannten Art gelöst, die mindestens einen Datenspeicher zum Speichern der Media-Dateien, mindestens eine Leseeinrichtung zur kontaktlosen Kommunikation mit einer Sendeeinrichtung, und mindestens eine Steuereinrichtung zum Auswählen und Weiterleiten der Media-Dateien umfasst. Die erfindungsgemäße Vorrichtung kann also nicht nur Media-Dateien speichern und weiterleiten, sondern diese auch nach einer Kommunikation mit einer Sendeeinrichtung gezielt auswählen. Wenn die Sendeeinrichtung beispielsweise mit einem zu präsentierenden Produkt assoziiert ist und eine spezifische Produktkennung versendet, kann die erfindungsgemäße Vorrichtung die zu dem Produkt gehörende Media-Datei auswählen und beispielsweise an eine geeignete Anzeigevorrichtung weiterleiten. Dass die Kommunikation mit der Sendeeinrichtung kontaktlos erfolgt, erhöht dabei zusätzlich die Flexibilität der erfindungsgemäßen Lösung. So kann die erfindungsgemäße Vorrichtung in vorteilhafter Weise beispielsweise in Form eines "Sticks", sozusagen als "Media-Stick", ausgebildet sein. Ein solcher Stick kann von den Kunden problemlos mitgeführt oder ohne hohe Kosten an diese ausgegeben werden.

In besonders vorteilhafter Ausgestaltung der Erfindung ist vorgesehen, dass die Vorrichtung mindestens eine Datenübertragungsschnittstelle aufweist, mittels der die Vorrichtung zumindest mit einer Anzeigevorrichtung verbindbar ist. Die Datenübertragungsschnittstelle kann dabei beispielsweise eine USB-Schnittstelle oder eine Drahtlosschnittstelle sein, vorzugsweise ist sie eine WLAN- oder Daten-Funkübermittlungs-Schnittstelle. Die erfindungsgemäße Vorrichtung kann also in vorteilhafter Weise beispielsweise als USB-Stick ausgebildet sein, was ihre Verwendung für mobile multimediale Präsentationen deutlich vereinfacht.

Die Leseeinrichtung kann beispielsweise ein Nahbereichsempfänger sein, vorzugsweise ein optischer oder Funk - Nahbereichsempfänger. Erfindungsgemäß bevorzugt sind insbesondere Infrarot- (IR-) Empfänger, Radiofrequenz- (RF-) Empfänger oder Induktions- (LF-) Empfänger.

Die erfindungsgemäße Vorrichtung kann in vorteilhafter Weise mindestens eine Datenempfangsvorrichtung umfassen, mittels der Media-Dateien empfangen werden können, die von einem optionalen Datensender versendet wurden. Auf diese Weise kann die erfindungsgemäße Vorrichtung bzw. ihr Datenspeicher ständig mit zusätzlichen Media-Dateien versehen bzw. aktualisiert werden.

Die Aufgabe wird erfindungsgemäß auch durch eine Präsentationsanordnung der eingangs genannten Art gelöst, die mindestens eine Sendeeinrichtung zum Senden spezifischer Daten an die Vorrichtung, und mindestens eine Anzeigevorrichtung zur multimedialen Präsentation der Media-Dateien umfasst, wobei zwischen der Vorrichtung und der Sendeeinrichtung eine kontaktlose Verbindung herstellbar und die Vorrichtung zumindest mit der Anzeigevorrichtung über eine Datenverbindung verbindbar ist. Die Sendeeinrichtung kann mit einem zu präsentierenden Produkt assoziiert sein und eine spezifische Produktkennung an die erfindungsgemäße Vorrichtung versenden, welche dann die zu dem Produkt gehörende Media-Datei auswählt und zur multimedialen Präsentation des Produkts an eine geeignete Anzeigevorrichtung weiterleitet. Es ist ein dabei besonderer Vorteil der erfindungsgemäßen Lösung, dass zur multimedialen Präsentation von Waren und/oder Dienstleistungen auf mobile multimediale Präsentationsgeräte zurückgegriffen werden kann, so dass die vorteilhafte Wirkung multimedialer Präsentationen für alle Produkte und Dienstleistungen, unter anderem auch im mittleren Preissegment, zur Geltung kommen kann. Dabei ist insbesondere von Vorteil, dass als multimediale Anzeigevorrichtung auch Geräte zum Einsatz kommen können, die viele Kunden ohnehin mit sich führen oder die ohne großes Risiko ausleihbar sind. So können erfindungsgemäß beispielsweise Wiedergabegeräte für audiovisuelle Dateien wie MPEG-Player, Netbook, eBook, Smartphone oder MDA als multimediale Anzeigevorrichtung verwendet werden, die zunehmende Verbreitung finden und die technischen Voraussetzungen für eine Produktpräsentation mitbringen. Diese multimedialen Anzeigegeräte verfügen zumeist über eine genormte USB-Schnittstelle, über die sie Media-Dateien, z.B. im MPEG-Format, wiedergeben können.

In besonders vorteilhafter Ausgestaltung der Erfindung ist vorgesehen, dass die Sendeeinrichtung ein Nahbereichssender ist, vorzugsweise ein optischer oder Funk - Nahbereichssender. Erfindungsgemäß bevorzugt sind insbesondere Infrarot- (IR-) Sender, Radiofrequenz- (RF-) Sender oder Induktions- (LF-) Sender. Die kontaktlose Verbindung zwischen der Sendeeinrichtung und der erfindungsgemäßen Vorrichtung ("Media-Stick") wird also vorzugsweise mittels Infrarot-, Funk-(Radiofrequenz-) und/oder Induktions-Übertragung hergestellt.

Vorzugsweise ist die Datenverbindung zwischen der erfindungsgemäßen Vorrichtung und der Anzeigevorrichtung eine USB-Verbindung. Die erfindungsgemäße Vorrichtung kann also in vorteilhafter Weise als USB-Stick ausgebildet sein, was ihre Verwendung für mobile multimediale Präsentationen deutlich vereinfacht.

Die Anzeigevorrichtung ist vorzugsweise ein MPEG-Player, ein Netbook, ein eBook, ein Smartphone, ein MDA oder ein GSM- oder UMTS - Telekommunikationsgerät. Besonders bevorzugt ist die Anzeigevorrichtung mit einer USB-Schnittstelle ausgestattet.

Die erfindungsgemäße Vorrichtung und die erfindungsgemäße Präsentationsanordnung eignen sich jeweils in besonders vorteilhafter Weise zur Durchführung multimedialen Präsentationen von Waren und/oder Dienstleistungen, vorzugsweise in der unten anhand der Abbildung beispielhaft beschriebenen Weise.

Die Aufgabe wird erfindungsgemäß ferner durch ein Verfahren der eingangs genannten Art gelöst, bei dem mindestens eine Sendeeinrichtung spezifische Daten an mindestens eine Vorrichtung sendet, die anhand der spezifischen Daten mindestens eine Media-Datei auswählt, die an mindestens eine Anzeigevorrichtung zur multimedialen Präsentation der Media-Datei übermittelt wird. Erfindungsgemäß wird ein einfaches und schnelles Verfahren zur multimedialen Präsentation von Produkten und/oder Dienstleistungen zur Verfügung gestellt, das zumindest auch im mittleren Preissegment eingesetzt werden kann.

Zwischen der Vorrichtung und der Sendeeinrichtung wird vorzugsweise eine kontaktlose Verbindung hergestellt, vorzugsweise eine optische oder Funk - Verbindung, über die die Sendeeinrichtung die spezifischen Daten an die Vorrichtung übermittelt. Die kontaktlose Verbindung zwischen der Sendeeinrichtung und der Vorrichtung wird kann in besonders vorteilhafter Weise mittels Infrarot-, Funk- (Radiofrequenz-) und/oder Induktions-Übertragung hergestellt werden.

Die Vorrichtung wird vorzugsweise zumindest mit der Anzeigevorrichtung über eine Datenverbindung verbunden, die vorzugsweise eine USB-Verbindung ist. Hierdurch wird das erfindungsgemäße Verfahren deutlich vereinfacht, das die Verbindung zwischen der Vorrichtung und der Anzeigevorrichtung schnell, zuverlässig und auf einfache Weise hergestellt werden kann.

In vorteilhafter Ausgestaltung des erfindungsgemäßen Verfahrens wird/werden die Media-Datei und/oder kleine Teildateien in einem Datenspeicher der Vorrichtung vorgehalten, so dass sie jederzeit flexibel abrufbar ist/sind.

Um die Flexibilität des Verfahrens weiter zu erhöhen und den Badarf an Speicherplatz zu minimieren, ist in vorteilhafter Weise vorgesehen, die Media-Datei ereignisgesteuert aus Teildateien zusammenzusetzen.

In besonders vorteilhafter Ausgestaltung des erfindungsgemäßen Verfahrens ist vorgesehen, dass aus der Media-Datei erst eine virtuelle Datei erzeugt wird, die dann an mindestens eine Anzeigevorrichtung übermittelt wird. Dabei kann insbesondere eine aus Teildateien - "just in time" - zusammengesetzte virtuelle Media-Datei an die mindestens eine Anzeigevorrichtung übermittelt werden. Es hat sich als besonders vorteilhaft herausgestellt, nur eine einzige Media-Datei anzubieten, die aber nicht real auf einem externen Datenträger vorhanden ist, sondern in Echtzeit, abhängig vom aktuellen Standort des Kunden, aus einer Sammlung von Produkt-Einzeldateien und Überleitungssequenzen virtuell nahtlos aufgebaut wird. Die Einzeldateien können bereits auf einem Datenträger vorliegen oder über eine Nahbereichsschnittstelle sukzessive in einen begrenzten temporären Speicher übertragen und dort bevorratet werden.

Vorzugsweise empfängt die Vorrichtung mindestens eine Kennung der Sendeeinrichtung und signalisiert anhand dieser Daten einer Steuereinheit, mindestens eine Media-Datei auszuwählen und an die Anzeigevorrichtung zu übermitteln.

Die Vorrichtung kann in vorteilhafter Ausgestaltung des erfindungsgemäßen Verfahrens sukzessive Media-Dateien empfangen und in einem temporären Speicher speichern.

Die Erfindung wird im weiteren anhand der Abbildung beispielhaft näher erläutert.

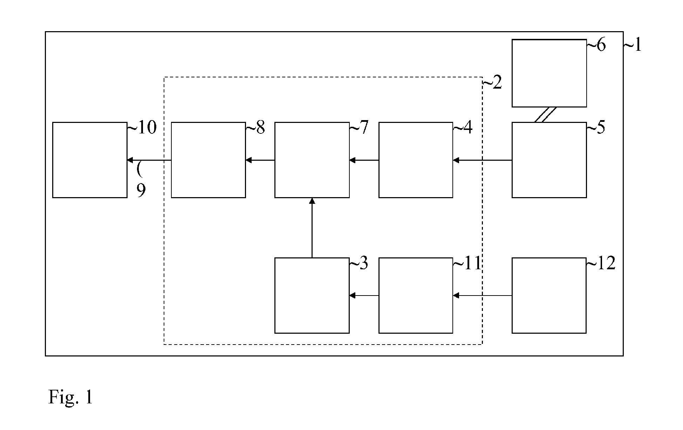

Figur 1 zeigt eine schematische Darstellung einer erfindungsgemäßen Präsentationsanordnung mit einer erfindungsgemäßen Vorrichtung.

Figur 1 zeigt eine Präsentationsanordnung 1 zur multimedialen Präsentation von Dienstleistungen, Waren und/oder anderen Gegenständen. Die Präsentationsanordnung 1 umfasst eine Vorrichtung 2, die einen Datenspeicher 3 zum Speichern von Media-Dateien aufweist, bei dem es sich beispielsweise um einen Speicher mit wahlfreiem Zugriff (RAM) handeln kann. Die Vorrichtung 2 weist ferner eine Leseeinrichtung 4 auf, die mit einer externen Sendeeinrichtung 5 kontaktlos kommunizieren kann. Die Sendeeinrichtung 5 ist einem zu präsentierenden Produkt bzw. einer zu präsentierenden Dienstleistung 6 zugeordnet und sendet spezifische Daten bezüglich des Produkts bzw. der Dienstleistung 6 (z. B. eine Produktkennung) an die Vorrichtung 2. Die kontaktlose Verbindung zwischen der Sendeeinrichtung 5 und der Vorrichtung 2 wird vorzugsweise mittels Infrarot-, Funk- (Radiofrequenz-) und/oder Induktions-Übertragung hergestellt. Dementsprechend ist die Sendeeinrichtung 5 vorzugsweise ein Infrarot- (IR-), Radiofrequenz- (RF-) und/oder Induktions- (LF-) Sender und die Leseeinrichtung 4 vorzugsweise ein Infrarot- (IR-), Radiofrequenz- (RF-) und/oder Induktions- (LF-) Empfänger. Die Erkennung des Standorts des Nutzers bzw. des zu präsentierenden Produkts kann also beispielsweise durch eine drahtlose optische oder radiofrequente Nahbereichübertragung von jedem Produkt aus erfolgen, wobei die Vorrichtung 2 im Kollisionsfall beispielsweise die Kennung mit der größten Feldstärke und einer Mindest-Verweildauer auswählt.

Die Vorrichtung 2 umfasst ferner eine Steuereinrichtung 7, die ein gesteuertes Weiterleiten der Media-Datei(en) ermöglicht. Bei der Steuereinrichtung 7 kann es sich beispielsweise um einen herkömmlichen Mikrocontroller handeln. Sendet die Sendeeinrichtung 5 beispielsweise eine spezifische Produktkennung an die Vorrichtung 2, dann steuert die Steuereinrichtung 7 die Auswahl der zu dem Produkt gehörenden Media-Datei aus dem Datenspeicher 3 und die Weiterleitung derselben an eine geeignete Anzeigevorrichtung 10 zur multimedialen Präsentation des Produkts. Die Anzeigevorrichtung 10 ist vorzugsweise ein MPEG-Player, ein Netbook, ein eBook, ein Smartphone, ein MDA oder ein GSM- oder UMTS - Telekommunikationsgerät. Die Weiterleitung der Datei(en) von der Vorrichtung 2 zu der Anzeigevorrichtung 10 erfolgt dabei über die Datenverbindung 9 mittels einer Datenübertragungsschnittstelle 8, bei der sich beispielsweise um einen USB-Controller handeln kann.

Erfindungsgemäß bevorzugt ist ein Verfahren, bei dem der multimedialen Anzeigevorrichtung 10 über die Datenübertragungsschnittstelle 8 nur eine einzige Media-Datei angeboten wird, die aber nicht real auf einem externen Datenträger vorhanden ist, sondern in Echtzeit, abhängig vom aktuellen Standort des Kunden, aus einer Sammlung von Produkt-Einzeldateien und Überleitungssequenzen virtuell nahtlos aufgebaut wird. Die Einzeldateien können bereits in dem Datenspeicher 3 vorliegen oder alternativ über die optionale Datenempfangsvorrichtung 11 sukzessive in einen begrenzten temporären Speicher (z. B. Datenspeicher 3) übertragen und dort bevorratet werden. Die optionale Datenempfangsvorrichtung 11 kann die Media-Dateien dabei von einem Datensender 12 empfangen.

Alle Komponenten der erfindungsgemäßen Vorrichtung 2 lassen sich in einem kompakten Gehäuse unmittelbar an der Datenübertragungsschnittstelle 8 (z. B. USB-Stecker) in einer Art "Stick" ("Media-Stick") unterbringen, der mit seinem Stecker in eine entsprechende Buchse der kundeneigenen oder geliehenen multimedialen Anzeigevorrichtung 10 gesteckt werden kann. Die zu erwartenden Fertigungskosten für den "Stick" lassen in vorteilhafter Weise auch den Einsatz als "give-away" zu.

### Beispiel:

Die erfindungsgemäße Vorrichtung ("Media-Stick") kann beispielsweise umfassen:
- einen USB-Verbinder als Datenübertragungsschnittstelle, der die elektrische und mechanische Verbindung mit einer multimedialen Anzeigevorrichtung herstellt,
- einen Datenspeicher, in dem kurze Media-Dateien zu den zu präsentierenden Produkten und/oder Dienstleistungen vorgehalten werden,
- eine Steuereinrichtung, die der Datenübertragungsschnittstelle (USB-Schnittstelle) eine Media-Datei anbietet, die aber nicht bereits fertig im Datenspeicher vorliegt, sondern ereignisgesteuert aus Teildateien zusammensetzt wird, und
- einen optischen oder radiofrequenten Nahbereichsempfänger, der die Kennung eines Nahbereichssenders am Produkt empfängt und der Steuereinrichtung signalisiert, die zugehörige Media-Datei nahtlos in den an die USB-Schnittstelle gerichteten Datenstrom einzubauen;
- sowie optional eine Datenempfangsvorrichtung, die Mediadaten sukzessive empfängt und in einem begrenzten temporären Speicher bevorratet.

Zur Verwendung wird der "Media-Stick" am Eingang des Ortes der Präsentation (z. B. eines Geschäfts, einer Messe oder einer Galerie) verteilt. Der Kunde steckt ihn in die USB-Buchse seiner, oder einer am Eingang ausgeliehenen, multimedialen Anzeigevorrichtung (z. B. Smartphone oder MDA) und startet die Wiedergabe der vom "Media-Stick" erzeugten virtuellen Media-Datei (z. B. im mpeg-Format). Die Steuereinrichtung überträgt an die multimediale Anzeigevorrichtung so lange Begrüßungs- bzw. Überleitungs-Dateien im mpeg-Format, bis der Stick in den Empfangsbereich eines Nahbereichssenders kommt. Ist die Datei komplett ausgegeben, werden endlos weitere Media-Dateien (Überleitdateien) ausgelesen und lückenlos an den übertragenen Datenstrom auf der Datenübertragungsschnittstelle angehängt ("virtuelle Media-Datei"). Der "Media-Stick" wartet also auf den Empfang einer Produktkennung von einer Sendeeinrichtung durch die Leseeinrichtung in Nutzernähe.

Sobald der Nahbereichsempfänger im "Media-Stick" eine Produktkennung empfängt, liest er diese aus und übergibt sie an die Steuereinrichtung. Diese greift auf die zugehörige Media-Datei im Datenspeicher zu und fügt sie ohne Unterbrechung in den Datenstrom an die USB-Schnittstelle ein. Erkennt die Nahbereichsschnittstelle während einer Mindest-Verweildauer eine andere Produktkennung mit höherer Intensität, so wird der Inhalt der hierzu gehörigen Media-Datei unterbrechungsfrei in den Datenstrom zur USB-Schnittstelle eingefügt. Bei mehreren empfangenen Produktkennungen ist also diejenige mit der höchsten Feldstärke/Intensität (in der Regel die nächstliegende) ausschlaggebend.

Die Steuereinrichtung überträgt die zur Produktkennung gehörige Media-Datei aus dem Datenspeicher über die Datenübertragungsschnittstelle zur Wiedergabe an die multimediale Anzeigevorrichtung. Der Nutzer der erfindungsgemäßen Vorrichtung erhält so die Produkt- und/oder Dienstleistungs-bezogenen Informationen als multimediale Präsentation, beispielsweise in optischer und akustischer Form.

Ist die Media-Datei komplett ausgegeben, werden endlos weitere Media-Dateien (Überleitungsdateien) ausgelesen und lückenlos an den übertragenen Datenstrom auf der Datenübertragungsschnittstelle angehängt. Der "Media-Stick" wartet dann auf den Empfang einer anderen (neuen) Produktkennung von einer anderen Sendeeinrichtung durch die Leseeinrichtung in Nutzernähe. Wenn der Nahbereichsempfänger eine andere (neue) Produktkennung empfängt, liest er diese aus und übergibt sie an die Steuereinrichtung, so dass ein weiterer Wiedergabezyklus eingeleitet wird.

Optional kann der Inhalt des Datenspeichers im "Media-Stick" über eine Nahbereichsfunkschnittstelle sukzessive aktualisiert werden, z. B. um veraltete Versionen zu ersetzen oder Inhalte für andere Produktbereiche bzw. Abteilungen bereitzustellen ("Updating"). Alternativ kann der Media-Stick darüber hinaus wie ein normaler "USB-Speicherstick" neu beschrieben werden.

## Patentansprüche

1. Vorrichtung (2) zum Speichern und gesteuerten Weiterleiten von Media-Dateien,
**gekennzeichnet durch**
mindestens einen Datenspeicher (3) zum Speichern der Media-Dateien,
mindestens eine Leseeinrichtung (4) zur kontaktlosen Kommunikation mit einer Sendeeinrichtung (5), und
mindestens eine Steuereinrichtung (7) zum Auswählen und Weiterleiten der Media-Dateien.

2. Vorrichtung nach Anspruch 1,
**dadurch gekennzeichnet,dass**
diese mindestens eine Datenübertragungsschnittstelle (8) aufweist, mittels der die Vorrichtung (2) zumindest mit einer Anzeigevorrichtung (10) verbindbar ist.

3. Vorrichtung nach Anspruch 2,
**dadurch gekennzeichnet, dass**
die Datenübertragungsschnittstelle (8) eine USB-Schnittstelle oder eine Drahtlosschnittstelle, vorzugsweise eine WLAN- oder Daten-Funkübermittlungs-Schnittstelle, ist.

4. Vorrichtung nach Anspruch 1, 2 oder 3,
**dadurch gekennzeichnet, dass**
die Leseeinrichtung (4) ein Nahbereichsempfänger ist, vorzugsweise ein optischer oder Funk - Nahbereichsempfänger.

5. Vorrichtung nach einem der vorhergehenden Ansprüche,
**dadurch gekennzeichnet,dass**
diese mindestens eine Datenempfangsvorrichtung (11) umfasst.

6. Präsentationsanordnung (1), umfassend mindestens eine Vorrichtung (2) nach einem der vorhergehenden Ansprüche,
**gekennzeichnet durch**
mindestens eine Sendeeinrichtung (5) zum Senden spezifischer Daten an die Vorrichtung (2), und
mindestens eine Anzeigevorrichtung (10) zur multimedialen Präsentation der Media-Dateien,
wobei zwischen der Vorrichtung (2) und der Sendeeinrichtung (5) eine kontaktlose Verbindung herstellbar und die Vorrichtung (2) zumindest mit der Anzeigevorrichtung (10) über eine Datenverbindung (9) verbindbar ist.

7. Präsentationsanordnung nach Anspruch 6,
**dadurch gekennzeichnet,dass**
die Sendeeinrichtung (5) ein Nahbereichssender ist, vorzugsweise ein optischer oder Funk - Nahbereichssender.

8. Präsentationsanordnung nach Anspruch 6 oder 7,
**dadurch gekennzeichnet, dass**
die Datenverbindung (9) eine USB-Verbindung ist.

9. Präsentationsanordnung nach einem der vorhergehenden Ansprüche,
**dadurch gekennzeichnet,dass**
die Anzeigevorrichtung (10) ein MPEG-Player, ein Netbook, ein eBook, ein Smartphone, ein MDA oder ein GSM- oder UMTS - Telekommunikationsgerät, vorzugsweise mit USB-Schnittstelle, ist.

10. Verwendung der Vorrichtung (2) nach einem der Ansprüche 1 bis 5 und/oder der Präsentationsanordnung (1) nach einem der Ansprüche 6 bis 9 zur interaktiven, multimedialen Präsentation von Waren und/oder Dienstleistungen.

11. Verfahren zur multimedialen Präsentation von Dienstleistungen, Waren und/oder anderen Gegenständen,
**dadurch gekennzeichnet, dass**
mindestens eine Sendeeinrichtung (5) spezifische Daten an mindestens eine Vorrichtung (2) sendet, die anhand der spezifischen Daten mindestens eine Media-Datei auswählt, die an mindestens eine Anzeigevorrichtung (10) zur multimedialen Präsentation der Media-Datei übermittelt wird.

12. Verfahren nach Anspruch 11,
**dadurch gekennzeichnet, dass**
zwischen der Vorrichtung (2) und der Sendeeinrichtung (5) eine kontaktlose Verbindung hergestellt wird, vorzugsweise eine optische oder Funk - Verbindung, über die die Sendeeinrichtung (5) die spezifischen Daten an die Vorrichtung (2) übermittelt.

13. Verfahren nach Anspruch 11 oder 12,
**dadurch gekennzeichnet, dass**
die Vorrichtung (2) zumindest mit der Anzeigevorrichtung (10) über eine Datenverbindung (9), vorzugsweise eine USB-Verbindung, verbunden wird.

14. Verfahren nach einem der vorhergehenden Ansprüche,
**dadurch gekennzeichnet,dass**
die Media-Datei und/oder kleine Teildateien in einem Datenspeicher (3) der Vorrichtung (2) vorgehalten wird/werden.

15. Verfahren nach einem der vorhergehenden Ansprüche,
**dadurch gekennzeichnet, dass**
die Media-Datei ereignisgesteuert aus Teildateien zusammengesetzt wird.

16. Verfahren nach einem der vorhergehenden Ansprüche,
**dadurch gekennzeichnet, dass**
aus der Media-Datei erst eine virtuelle Datei erzeugt wird, die dann an mindestens eine Anzeigevorrichtung (10) übermittelt wird.

17. Verfahren nach den Ansprüchen 15 und 16,
**dadurch gekennzeichnet,dass**
die aus Teildateien zusammengesetzte virtuelle Media-Datei an die mindestens eine Anzeigevorrichtung (10) übermittelt wird.

18. Verfahren nach einem der vorhergehenden Ansprüche,
**dadurch gekennzeichnet, dass**
die Vorrichtung (2) mindestens eine Kennung der Sendeeinrichtung (5) empfängt und anhand dieser Daten einer Steuereinheit (7) signalisiert mindestens eine Media-Datei auszuwählen und an die Anzeigevorrichtung (10) zu übermitteln.

19. Verfahren nach einem der vorhergehenden Ansprüche,
**dadurch gekennzeichnet, dass**
die Vorrichtung (2) sukzessive Media-Dateien empfängt und in einem temporären Speicher speichert.
